# EUROPÄISCHE PATENTSCHRIFT

(11) **EP 0 400 393 B1**
(45) Veröffentlichungstag und Bekanntmachung des Hinweises auf die Patenterteilung: **21.07.1993**
(21) Anmeldenummer: 90109138.9
(22) Anmeldetag: 15.05.1990
(51) Int. Cl.: B62D 25/20

(54) **Verschlussdeckel**
Sealing cover
Bouchon d'étanchéité

(30) Priorität: 29.05.1989 DE 3917407
(43) Veröffentlichungstag der Anmeldung: 05.12.1990
(73) Patentinhaber: TRW United-Carr GmbH & Co. KG, D-67677 Enkenbach-Alsenborn (DE)
(72) Erfinder: Sick, Hans-Hermann, D-6750 Kaiserslautern (DE)
(74) Vertreter: Schieschke, Klaus, Dipl.-Ing.

(56) Entgegenhaltungen:
- WO-A-86/03721
- DE-A- 3 512 582
- DE-U- 8 707 279
- US-A- 4 784 285

## Beschreibung

Die Erfindung bezieht sich auf einen Verschlußdeckel aus Kunststoff, insbesondere zum Verschließen einer Öffnung in einer Kraftfahrzeugkarosserie, mit einem Bodenteil, welches mit einem den Rand der Öffnungsoberseite überdeckenden, elastisch verformbaren Flansch verbunden ist und mit einem an das Bodenteil angeformten, die Öffnungsunterseite beaufschlagenden, schräg nach außen verlaufenden Rastring.

Als Stand der Technik ist bereits ein derartiger gattungsgemäßer Verschlußdeckel bekannt, welcher insbesondere zum Abdichten von Lackauslauflöchern in Karosserien von Kraftfahrzeugen dient (DE-A 35 12 582). Hierbei kann sich jedoch der Nachteil ergeben, daß die Oberseite bzw. die Unterseite des Trägers im Bereich der Öffnung nicht so plan ist, daß die Dichtwirkung des Flansches oder des Rastringes ungenügend ist. Ein weiterer Parameter für das Erzielen einer einwandfreien Dichtigkeit der Lackauslauflöcher besteht in der Wahl des Kunststoffmaterials des Verschlußdeckels.

Weitere bekannte Verschlußdeckel verwenden zur Herstellung von Dichtigkeit ein Zwischenelement, was Kostenaufwendig ist (GB-A 1 354 973; DE-A 30 11 448).

Demgegenüber liegt der vorliegenden Erfindung die Aufgabe zugrunde, einen Verschlußdeckel der eingangs genannten Art so zu gestalten, daß eine verbesserte Dichtwirkung im Flansch und im Rastringbereich erzielt wird.

Diese Aufgabe wird erfindungsgemäß durch die Merkmale des kennzeichnenden Teils des Anspruchs 1 gelöst, wobei jeweils an der Stirnseite des Flansches und des Rastringes eine, den Randbereich der Öffnung beaufschlagende Dichtlippe angeordnet ist. Hierdurch ergibt sich der Vorteil, daß sowohl im Mikrobereich (Oberflächenrauhigkeit) als auch im Makrobereich (Unebenheiten, Welligkeiten) eine gute Anschmiegung der Randzonen des erfindungsgemäßen Verschlußdeckels an die Oberfläche des Karosseriebauteils erzielt wird. Da diese Dichtlippen eine hohe Reißfestigkeit und Dehnung infolge Verwendung von Polyesterelastomer besitzen, wird eine verbesserte Dichtwirkung erzielt.

Um hohe Ausdrückkräfte eines solchen Verschlußdeckels zu erreichen, ist die Verwendung von steifen bzw. harten Materialien notwendig. Dies kann durch den Einsatz von Schnittfaser-Verstärkung erreicht werden. Hierbei zeigen jedoch nachteiligerweise die Lippen aus einem derartigen harten bzw. steifen Werkstoff nur unzureichende Dichtwirkung. Deshalb wird in einer weiteren Ausgestaltung der Erfindung die Dichtlippe gegenüber der Materialdicke des Flansches und des Rastringes so dünnwandig ausgebildet, daß sie nur von dem leicht fließenden Basispolymer, aber nicht von den Glasfasern gefüllt werden können.

Die Zurückhaltung der Glasfasern von den Einflüssen in der Dichtlippe kann beispielsweise auch durch mindestens eine Stauzone in Füllrichtung vor der jeweiligen Dichtlippe erreicht werden. Dies läßt sich beispielsweise durch Einsatz von Ringnuten erreichen. Auch hierdurch wird die besondere Schmiegewirkung der dünnwandigen Dichtlippen erhöht, indem bei Verwendung von glasfaserverstärktem Material keine Glasfasern in den Lippenbereich gelangen, so daß ein steifer Deckel mit äußerst flexiblen Dichtlippen entsteht.

In weiterer Ausgestaltung der Erfindung kann jeweils am Übergang der Dichtlippe in den Flansch bzw. in den Rastring eine an den Flansch bzw. den Dichtring angeformte Abstützzone vorgesehen sein. Damit werden genügend Verformungsreserven geschaffen, so daß die Lippe auch bei voller Anpressung die Möglichkeit hat, ihre einwandfreie Dichtwirkung zu entfalten. Bei Anlage dieser Abstützelemente entsteht ebenfalls eine Abdichtwirkung, so daß günstigstenfalls eine doppelte Dichtwirkung, nämlich durch die Dichtlippe einerseits und durch die Abdichtzone andererseits, erzielt wird.

Bei einem Verschlußdeckel, bei welchem an das versenkt angeordnete Bodenteil eine die Öffnung durchsetzende Schulter anschließt, kann erfindungsgemäß der an die Schulter angeformte Flansch stirnseitig mit der dünnwandigen Dichtlippe versehen sein.

Die Erfindung wird nachfolgend anhand von in der Zeichnung dargestellten Ausführungsbeispielen näher beschrieben. In der Zeichnung zeigen:
- Fig. 1: einen Teil des erfindungsgemäßen Verschlußdeckels im Mittelschnitt;
- Fig. 2. und 3: verschiedene Ausführungsformen des Verschlußdeckels, teils gebrochen.

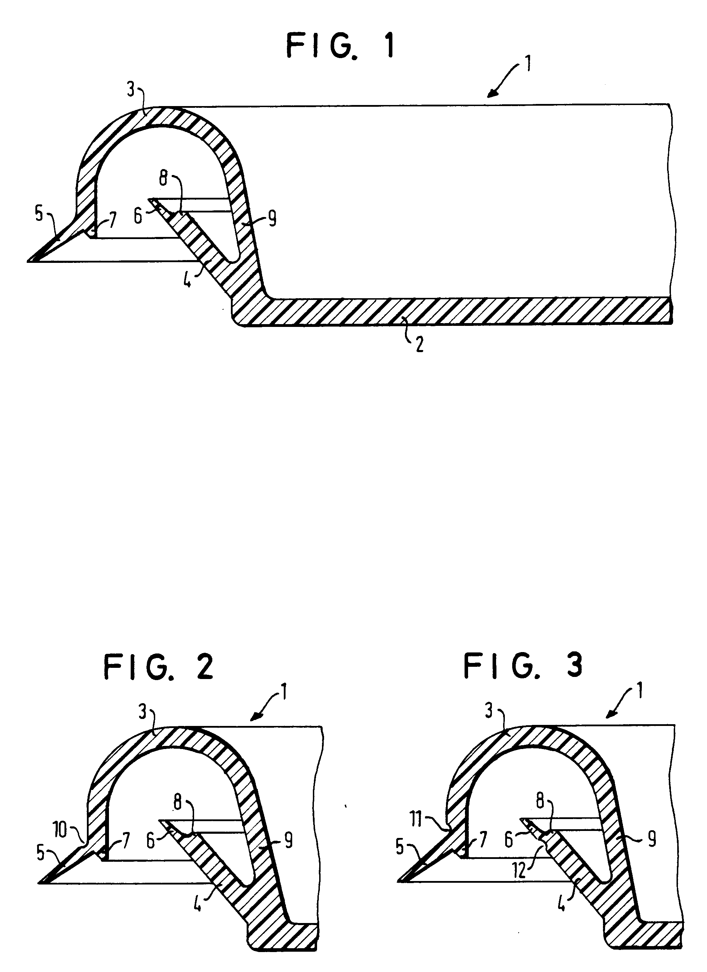

Nach Fig. 1 besteht der Verschlußdeckel 1 im wesentlichen aus einem Bodenteil 2, an welchem eine nicht näher dargestellte Öffnung eines Trägers durchsetzende Schulter 9 angeformt ist. Diese Schulter 9 geht in einen Flansch 3 über, welcher elastisch verformbar ausgebildet sein kann.

Im unteren Bereich ist an das Bodenteil 2 ein schräg nach außen verlaufender Rastring 4 angeordnet.

Jeweils an der Stirnseite des Flansches 3 und des Rastringes 4 ist eine, den Randbereich der Öffnung eines nicht näher dargestellten Trägers beaufschlagende Dichtlippe 5 bzw. 6 angeordnet. Hierbei sind die Dichtlippen 5 und 6 gegenüber der Materialdicke des Flansches 3 und des Rastringes 4 jeweils dünnwandig ausgebildet.

Besteht der Verschlußdeckel aus glasfaserverstärktem Material, so ist dafür Sorge zu tragen, daß die dünnwandigen Dichtlippen 5 bzw. 6 glasfaserfrei ausgebildet sind, um ihre volle Dichtwirkung zu entfalten. Damit liegt ein steifer Verschlußdeckel 1 mit äußerst flexiblen Dichtlippen 5 bzw. 6 vor, welche einerseits die Öffnungsoberseite eines nicht näher dargestellten Trägers und andererseits die Öffnungsunterseite dieses Trägers elastisch beaufschlagen.

Zur weiteren Verbesserung der Dichtwirkung sind jeweils am Übergang der Dichtlippe 5 bzw. 6 in den Flansch 3 bzw. in den Rastring 4 eine an den Flansch 3 bzw. den Dichtring 4 angeformte Abstützzone 7 bzw. 8 vorgesehen. Dadurch wird erreicht, daß selbst bei maximalem Anpreßdruck durch den Flansch 3, z.B. bei maximaler Blechstärke, die Dichtlippe 5 oder 6 nie ganz flächig mit der jeweiligen Fläche des Karosseriebleches zur Anlage kommt. Damit haben die Dichtlippen 5 und 6 immer noch genügend Verformungsreserven, um sich an Welligkeiten in der Oberfläche der abzudichtenden Blechkonstruktion anzuschmiegen. Natürlich wird auch beim Andrücken der Abstützzonen 7 und 8 die Dichtwirkung verdoppelt.

Das in der Zeichnung dargestellt Ausführungsbeispiel zeigt einen Verschlußdeckel, dessen Bodenteil 2 versenkt angeordnet ist, wobei dieser Bodenteil 2 in eine die Öffnung eines nicht näher dargestellten Trägers durchsetzende Schulter 9 übergeht. Es besteht alternativ auch die nicht näher dargestellte Möglichkeit, daß das Bodenteil 2 im oberen Bereich, mit Wegfall der Schulter 9, direkt an den Flansch 3 anschließt, wobei auch bei dieser Bauform der Flansch 3 stirnseitig die dünnwandige Lippe 5 und die Abstützzone 7 und der schräg aufragende Rastring 4 gleichfalls die Dichtlippe 6 mit der Abstützzone 8 aufweisen.

Erfindungsgemäß kann der Verschlußdeckel entweder aus Polyesterelastomer bestehen, wobei die äußerst dünnwandig ausgebildeten Dichtlippen 5 bzw. 6 hohe Reißfestigkeit und Dehnung besitzen.

Nach Fig. 2 besteht die Möglichkeit, bei einem Verschlußdeckel aus hartem bzw. steifen Werkstoff (beispielsweise durch Einsatz von Schnittglasfaser-Verstärkung) eine Stauzone 10 in Füllrichtung vor der Dichtlippe 5 anzuordnen. Hierdurch wird erreicht, daß die Dichtlippe 5 nur von dem leicht fließenden Basispolymer, jedoch nicht von den Glasfasern gefüllt wird, so daß eine sehr vorteilhafte Elastizität der Dichtlippe 5 gegeben ist.

Alternativ besteht gemäß Fig. 3 die Möglichkeit, daß beide Dichtlippen 5 und 6 mit einer derartigen Stauzone 11 bzw. 12 versehen sind, so daß auch hierdurch der Effekt erzielt wird, daß eine sehr hohe Elastizität der beiden Dichtringe 5 bzw. 6 gegeben ist.

Durch die entsprechenden Stauzonen 10 bzw. 11 bzw. 12 erfolgt vorteilhafterweise eine Zurückhaltung der Glasfasern von dem Einfließen in die Dichtlippe.

Durch Einsatz dieser Dichtlippen 5 und 6 sowie gegebenenfalls der damit zusammenwirkenden Abstützzonen 7 und 8 wird eine wesentlich verbesserte Dichtwirkung einer Öffnung insbesondere in einer Kraftfahrzeugkarosserie bewirkt und zwar sowohl im Mikroals auch im Makrobereich.

## Patentansprüche

1. Verschlußdeckel (1) aus Kunststoff, insbesondere zum Verschließen einer Öffnung in einer Kraftfahrzeugkarosserie, mit einem Bodenteil (2), welches mit einem den Rand der Öffnungsoberseite überdeckenden, elastisch verformbaren Flansch (3) verbunden ist und mit einem an das Bodenteil (2) angeformten, die Öffnungsunterseite beaufschlagenden, schräg nach außen verlaufenden Ranstring (4), dadurch gekennzeichnet, daß jeweils an der Stirnseite des Flansches (3) und des Rastringes (4) eine, den Randbereich der Öffnung beaufschlagende Dichtlippe (5; 6) angeordnet ist.

2. Verschlußdeckel nach Anspruch 1, dadurch gekennzeichnet, daß die Dichtlippe (5; 6) gegenüber der Materialdicke (3) und des Rastringes (4) jeweils dünnwandig ausgebildet ist.

3. Verschlußdeckel nach Anspruch 1 und 2, bestehend aus einem glasfaserverstärkten Material, dadurch gekennzeichnet, daß die dünnwandigen Dichtlippen (5; 6) glasfaserfrei ausgebildet sind.

4. Verschlußdeckel nach einem der vorhergehenden Ansprüche, dadurch gekennzeichnet, daß jeweils am Übergang der Dichtlippe (5; 6) in den Flanschen (3) bzw. in den Rastring (4) eine an den Flansch (3) bzw. den Rastring (4) angeformte Abstützzone (7; 8) vorgesehen ist.

5. Verschlußdeckel nach einem der vorhergehenden Ansprüche, bei welchen an das versenkt angeordnete Bodenteil eine die Öffnung durchsetzende Schulter anschließt, dadurch gekennzeichnet, daß der an die Schulter (9) angeformte Flansch (3) stirnseitig mit der dünnwandigen Dichtlippe (5) versehen ist.

6. Verschlußdeckel nach Anspruch 3, dadurch gekennzeichnet, daß eine Stauzone (10; 11; 12) in Füllrichtung vor mindestens einer der Dichtlippen (5; 6) angeordnet ist.

## Claims

1. Sealing cover (1) of plastic, in particular for sealing an opening in the bodywork of a vehicle, having a bottom part (2), which is connected to an elastically deformable flange (3) covering the edge of the upper side of the opening, and having an obliquely outwardly running locking ring (4), moulded onto the bottom part (2) and acting on the underside of the opening, characterised in that a sealing lip (5; 6), acting on the edge region of the opening, is arranged in each case on the end face of the flange (3) and of the locking ring (4).

2. Sealing cover according to Claim 1, characterised in that the sealing lip (5; 6) is in each case of a thin-walled form in comparison with the material thickness (3) and the locking ring (4).

3. Sealing cover according to Claims 1 and 2, consisting of a glass-fibre-reinforced material, characterised in that the thin-walled sealing lips (5; 6) are formed without any glass fibre.

4. Sealing cover according to one of the preceding claims, characterised in that at the transition of the sealing lip (5; 6) into the flanges (3) and into the locking ring (4) there is provided in each case a supporting zone (7; 8) moulded onto the flange (3) or the locking ring (4), respectively.

5. Sealing cover according to one of the preceding claims, in which a shoulder passing through the opening adjoins the countersunk-arranged bottom part, characterised in that the flange (3) mouled onto the shoulder (9) is provided at its end face with the thin-walled sealing lip (5).

6. Sealing cover according to Claim 3, characterised in that a restricted-flow zone (10; 11; 12) is arranged ahead of at least one of the sealing lips (5; 6) in the filling direction.

## Revendications

1. Bouchon d'étanchéité (1) en matière plastique, notamment pour l'obturation d'une ouverture dans la carrosserie d'un véhicule automobile, muni d'une partie de fond (2) qui est raccordée à une collerette (3) déformable élastiquement, recouvrant le bord du côté supérieur de l'ouverture et avec un anneau d'arrêt (4) s'étendant obliquement vers l'extérieur, rapporté sur la partie de fond (2) et coopérant avec le côté inférieur de l'ouverture, caractérisé en ce que sur le côté frontal de la collerette (3) et de l'anneau d'arrêt (4) est chaque fois prévue une lèvre d'étanchéité (5; 6) coopérant avec la zone marginale de l'ouverture.

2. Bouchon d'étanchéité selon la revendication 1, caractérisé en ce que la lèvre d'étanchéité (5 ; 6) est respectivement conçue avec des parois minces par rapport à l'épaisseur de la matière de la collerette (3) et de l'anneau d'arrêt (4).

3. Bouchon d'étanchéité selon les revendications 1 et 2, consistant en un matériau renforcé par des fibres de verre, caractérisé en ce que les lèvres d'étanchéité à parois minces (5 ; 6) sont conçues sans fibres de verre.

4. Bouchon d'étanchéité selon l'une des revendications précédentes, caractérisé en ce qu'il est respectivement prévu sur la zone de transition allant de la lèvre d'étanchéité (5 ; 6) à la collerette (3 ou à l'anneau d'arrêt (4) une zone d'appui (7 ; 8) rapportée sur la collerette (3) ou l'anneau d'étanchéité (4).

5. Bouchon d'étanchéité selon l'une des revendications précédentes, dans lequel un épaulement traversant l'ouverture est raccordé à la partie de fond disposée de façon encastrée, caractérisé en ce que la collerette (3) rapportée sur l'épaulement (9) est munie sur le côté frontal de la lèvre d'étanchéité (5) à parois minces.

6. Bouchon d'étanchéité selon la revendication 3, caractérisé en ce qu'une zone d'étranglement (10 ; 11 ; 12) est agencée dans le sens de remplissage avant au moins l'une des lèvres d'étanchéité (5 ; 6).
